# EUROPEAN PATENT SPECIFICATION

(11) **EP 2 310 218 B1**
(45) Date of publication and mention of the grant of the patent: **28.11.2012**
(21) Application number: 09794092.8
(22) Date of filing: 10.07.2009
(51) Int. Cl.: B60H 1/00

(54) **VENTILATION SYSTEM**
BELÜFTUNGSSYSTEM
SYSTÈME DE VENTILATION

(30) Priority: 11.07.2008 IT BO20080433
(43) Date of publication of application: 20.04.2011
(73) Proprietor: SPAL Automotive S.r.l., 42015 Correggio (IT)
(72) Inventor: SPAGGIARI, Alessandro, 42015 Correggio (Reggio Emilia) (IT)
(74) Representative: Puggioli, Tommaso
(86) International application number: PCT/IB2009/053018
(87) International publication number: WO 2010/004533

(56) References cited:
- DE-A1- 4 033 092
- DE-A1- 10 257 642
- DE-A1- 10 322 953
- DE-A1-102005 027 999

## Description

### Technical Field

This invention relates to a ventilation system and, in particular, to a motor vehicle ventilation system comprising one or more electric ventilators.

### Background Art

Modem ventilation systems for motor vehicles, especially motor cars, comprise one or more electric ventilators, each defined by a fan combined with an electric motor, and a unit for controlling the ventilators.

The control unit, installed on the board the vehicle, uses sensors mounted in various parts of the vehicle to acquire a plurality of vehicle functional parameters which are processed to generate a signal for controlling the motors of the electric fans.

The electric ventilators comprise a microcontroller that translates the control signal into the fan rotation speed in response to the control unit.

In other words, in prior art solutions, while the vehicle's control unit processes the data from the sensors and translates them into a control signal for the electric fan, the motor's electronic section, that is, the microcontroller, converts the signal into the rotation speed of the fan.

Electric fans may be used in particular to ventilate the vehicle cabin or to cool the radiating bodies normally mounted on board the vehicle, such as, for example, the radiator of the propellant coolant, the motor oil radiator or the coolant condenser of the air conditioning system.

The control signal therefore expresses the different temperature requirements of the radiating bodies mounted on the vehicle.

The control unit is especially designed to perform the above mentioned tasks of acquiring and processing the information from the sensors and is therefore highly complicated in this respect.

In vehicles that are less sophisticated in terms of cooling and ventilation, such as earthmoving machines and farm tractors, the ventilation systems are normally driven by a thermostatic bulb which is combined with the radiator and which controls the activation of the electric fan.

In these vehicles, therefore, engine cooling is never optimized since the ventilation system is controlled as a function of the temperature of the water present in the cooling circuit and not as a function of other important operating temperatures or of the requirements of other radiating bodies mounted on the vehicle.

It should be noted that vehicles of this type cannot be equipped with ventilation systems of the kind described above because these vehicles either do not have control units or the control units they do have are unable to also control the ventilation system.

It should also be observed that very often these vehicles do not have sensors capable of detecting the above mentioned control parameters and it is therefore difficult, if not impossible, to optimize the operation of the electric ventilator. Document DE 102 57 642 A1, which is considered as the closest prior art, discloses a ventilation system for vehicles of a known type.

### Disclosure of the Invention

In this context, the main purpose of the present invention is to propose a ventilation system which is free of the above mentioned disadvantages.

One aim of this invention is to provide a ventilation system that is efficient and more versatile than prior art ventilation systems.

Another aim of the invention is to provide a ventilation system suitable for mounting on vehicles such as earthmoving machines and farm tractors without sophisticated control units and/or sensors for acquiring the vehicle's operating parameters.

The above mentioned purpose and aims are substantially achieved by a ventilation system having the characteristics defined in the independent claim 1 and in the dependent claims.

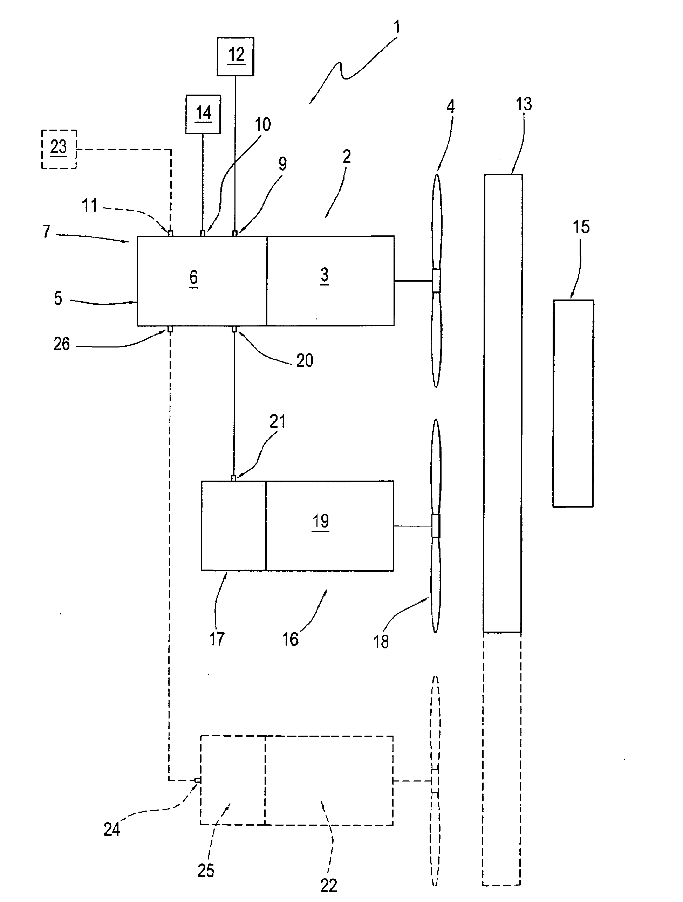

### Brief Description of the Drawing

Further features and advantages of the present invention are more apparent in the detailed description below, with reference to a preferred, non-limiting, embodiment of a ventilation system, as illustrated in the accompanying drawing in which the ventilation system according to the invention is represented in a diagram, partly in blocks:

### Detailed Description of the Preferred Embodiments of the Invention

The numeral 1 in the accompanying drawing denotes a ventilation system for a generic vehicle, not illustrated, according to the invention.

The system 1 comprises an electric ventilator 2 which, as explained below, is referred to as "master", in turn comprising an electric motor 3 and a fan 4 driven by the motor 3.

The electric ventilator 2, preferably of the axial type, comprises means 5, associated with the motor 3, for controlling the rotation speed of the motor 3 itself and hence of the fan 4.

According to the invention, the control means 5 comprise a computerized control unit 6, generally represented as a microcontroller 6, installed on board the motor 3 and designed to control the speed of the motor 3.

In the system 1 according to the invention, the microcontroller 6 is structured or programmed not only to control the rotation speed, but also to acquire and process one or more of the vehicle's functional parameters, that is, parameters relating to vehicle operation, on the basis of which a control signal is generated and translated into the speed of the motor 3.

In other words, the microcontroller 6 constitutes processing means 7 that can be associated with the vehicle to process the latter's functional parameters used to define the rotation speed of the motor 3.

In an alternative embodiment not illustrated, the control means 5 comprise a first microcontroller designed to control the rotation speed and a second microcontroller constituting the above mentioned processing means 7 for processing the functional parameters acquired from the vehicle and generating a control signal for the first microcontroller.

The control means 5 are therefore designed to control the motor 3 but also to implement logics which, in practice, can determine the optimum rotation speed of the motor 3 according to the needs to remove air from the vehicle or from the radiating bodies mounted in the vehicle. According to the invention, the control means 5 have a plurality of inputs 9, 10, 11 through which the processing means 7 acquire the functional parameters of the vehicle.

Through the inputs 9, 10, 11 the signals indicative of the quantities of interest reach the processing means 7 which process them as described above.

In the preferred embodiment illustrated by way of an example, the system 1 comprises a temperature sensor 12 that can be associated with a cooling circuit having a radiating body 13, schematically represented, for the vehicle's propellant to monitor the temperature of the cooling liquid.

The information thus obtained is sent through the input 9 to the microcontroller 6.

The system comprises a pressure sensor 14 that can be associated with a cabin air conditioning system, schematically represented by a condenser 15, for detecting the pressure of the coolant in the system 15.

The information thus obtained is sent through the input 10 to the microcontroller 6 which uses it to process the optimum rotation speed of the fan 4.

The control means 5, suitably equipped with the processing means 6, constituting the part of the electric ventilator 2 known in its entirety as the "electronics", are thus able to acquire the temperature of the coolant and the pressure of the air conditioning system and to translate this information into the optimum rotation speed of the fan 4.

Obviously, in alternative embodiments not illustrated, the control means 5 are provided with a plurality of inputs, only one of which, labelled 11, is shown in the drawing, depending on the type and number of parameters to be used to control the speed of the fan 4.

It should be noted that in alternative embodiments, the sensors 12, 14 forming part of the system 1 are ready fitted in the vehicle and the information provided by them is sent to the inputs 9, 10 of the control means 5.

As illustrated in the drawing, the ventilation system 1 comprises a second electric ventilator 16, referred to, for clarity of description, as "slave".

The second electric ventilator 16 is also of the axial type and has performance data and technical specifications analogous to those of the "master" electric ventilator.

In the case of large radiating bodies, two or more electric ventilators may be used to extract the heat.

In the embodiment illustrated, the "master" electric ventilator is combined with the "slave" electric ventilator 16.

The electric ventilator 16 comprises respective control means 17 designed to translate the control signal generated by the processing means 7 of the electric ventilator 2 into the rotation speed of the corresponding fan 18 driven by a motor 19.

The control means 5 of the electric ventilator 2 comprise an output 20 for driving the "slave" electric ventilator 16.

The electric ventilator 16 has an input 21 placed in communication with the output 20 of the electric ventilator 2 from which it receives the same control signal generated by the processing means 7 for the control means 5 of the electric ventilator 2.

In practice, therefore, in the system 1 as described a main electric ventilator, labelled 2 in the example, is equipped with the microcontroller 6 which is able to process the signals from suitable sensors 12, 14 and to generate a control signal that must be translated into an optimum rotation speed for the fans 4, 18.

The microcontroller 6 itself translates the control signal into the rotation speed for the fan 4; the same control signal is sent to the electric ventilator 16 where the control means 17 translate it into the optimum rotation speed for the fan 18.

Advantageously, the rotation speeds of the fans 4 and 18 are substantially the same so as to also reduce noise more effectively.

In alternative embodiments, the system 1 comprises a plurality of "slave" electric ventilators, illustrated schematically with dashed lines and labelled 22, each having a respective input 24 for the respective electronics 25, all driven by the control means 5 of the "master" electric ventilator.

For this purpose, the electric ventilator 2 has one or more outputs 26 for driving the further electric ventilators 16.

In alternative embodiments not illustrated, the electric ventilator 2 comprises a plurality of outputs 20 through which a control signal suitably processed by the microcontroller 6 is sent to the devices in the vehicle which, therefore, are in practice driven by the electric ventilator 2.

Preferably, for example, one control signal is sent to the water pump of the cooling circuit or to a solenoid valve along the cooling circuit to regulate the flow rate of the coolant according to the temperatures measured.

It is important to note that the application of a system 1 as described in the foregoing is also particularly advantageous in the cabin of the vehicle.

In this case, the electric ventilator 2 is a centrifugal ventilator and the sensor associated with its control means 5 is a temperature sensor for monitoring the temperature of the air in the cabin. The rotation speed of the fan is determined by the microcontroller 6 according to the cabin temperature.

The invention has important advantages.

The fact that the electric ventilator is itself provided with sophisticated processing means allows the system 1 to be mounted also on vehicles without particularly advanced control units, enabling the thermal and cooling flows to be optimized.

If the vehicle is, or can be expected to be, equipped with temperature sensors, generically illustrated by the dashed line and schematically represented as a block 23, for example to monitor the oil temperatures of gearbox, cylinder head and engine, or to measure engine rpm, the respective quantities can be used as input for the microcontroller; in this way, even in the presence of two or more radiating bodies, each used for a specific purpose, the rotation speed of the cooling fans is optimally calibrated.

Thus, the electric ventilator equipped with the control means 5 can itself directly process the information from the sensors which, in practice, determine the speed of the fan.

The use of a "master" electric ventilator and one or more "slave" electric ventilators enables the efficiency of the former to be applied effectively to the latter to create a ventilation system that is at once inexpensive, versatile and efficient.

The invention described above may be modified and adapted in several ways without thereby departing from the scope of the inventive concept, as defined in the claims herein.

## Claims

1. A ventilation system for vehicles comprising:
- at least one master electric ventilator (2) comprising a fan (4), an electric motor (3) for driving the fan (4) and control means installed at the motor (3) for controlling the rotation speed of the fan (4), the control means comprising a computerized control unit (6) and a plurality of input (9, 10, 11) for at least one vehicle's parameter, the ventilation system being **characterized in that** the computerized control unit (6) is programmed to acquire and process the vehicle's parameters in order to generate a control signal for controlling the rotation speed of the electric motor (3), the control means (5) also comprising at least one output (20, 26) for the control signal, the ventilation system also comprising
- at least one second slave electric ventilator (16, 22) comprising a second fan (18), a second electric motor (19) for driving the second fan (18) and respective second control means (17, 25) designed to translate the control signal into a second rotation speed of the second fan (18), the second electric ventilator (16, 22) having a respective second input (21, 24) in communication with the output (20, 26).

2. The system according to any of the foregoing claims, **characterized in that** the processing means (7) comprise at least one temperature sensor (12) for detecting the functional parameter.

3. The system according to any of the foregoing claims, **characterized in that** the processing means (7) comprise at least one pressure sensor (14) for detecting the functional parameter.

4. The system according to claim 2 or 3, **characterized in that** the temperature sensors (12) and/or the pressure sensor (14) are ready fitted in the vehicle.

5. The system according to any of the foregoing claims, **characterized in that** the control means (5) comprise a first microcontroller designed to control the rotation speed of the fan (4) and a second microcontroller defining the computerized control unit (6) processing the functional parameters and generating the control signal.

6. The system according to any of the foregoing, claims, **characterized in that** it comprises a plurality of slave electric ventilators (16, 22) driven by the control means (5) of the master electric ventilator, each slave electric ventilator having a respective input (21, 24) or the control signal.

7. The system according to any of the foregoing claims, **characterized in that** the master electric ventilator (2) comprises a plurality of outputs (20) through which a second control signal suitably processed by the computerized control unit (6) is sent to devices in the vehicle which are driven by the master electric ventilator (2).

8. The system according claim 1, **characterized in that** the master electric ventilator (2) is a centrifugal ventilator and a vehicle's parameter is the temperature of the air in the cabin of the vehicle, the rotation speed of the fan (4) being determined by the computerized control unit (6) according to the cabin temperature.

## Patentansprüche

1. Belüftungssystem für Fahrzeuge, umfassend:
- mindestens einen elektrischen Master-Lüfter (2), umfassend einen Ventilator (4), einen Elektromotor (3) zum Antrieb des Ventilators (4) und Steuermittel, die am Motor (3) zur Steuerung der Drehgeschwindigkeit des Ventilators (4) installiert sind, wobei die Steuermittel eine computergestützte Steuereinheit (6) und eine Vielzahl von Eingängen (9, 10, 11) für mindestens einen Fahrzeugparameter umfassen, wobei das Belüftungssystem **dadurch gekennzeichnet ist, dass** die computergestützte Steuereinheit (6) dazu programmiert ist, die Fahrzeugparameter zu erfassen und zu verarbeiten, um ein Steuersignal zur Steuerung der Drehgeschwindigkeit des Elektromotors (3) zu erzeugen, wobei die Steuermittel (5) ferner mindestens einen Ausgang (20, 26) für das Steuersignal umfassen, wobei das Belüftungssystem ferner Folgendes umfasst:
- mindestens einen zweiten elektrischen Slave-Lüfter (16, 22), umfassend einen zweiten Ventilator (18), einen zweiten Elektromotor (19) zum Antrieb des zweiten Ventilators (18) und entsprechende zweite Steuermittel (17, 25), die dazu konzipiert sind, das Steuersignal in eine zweite Drehgeschwindigkeit des zweiten Ventilators (18) zu übertragen, wobei der zweite Elektrolüfter (16, 22) einen entsprechenden zweiten Eingang (21, 24) aufweist, der mit dem Ausgang (20, 26) in Verbindung steht.

2. System nach einem der vorangehenden Ansprüche, **dadurch gekennzeichnet, dass** die Verarbeitungsmittel (7) mindestens einen Temperatursensor (12) zum Ermitteln des Funktionsparameters umfassen.

3. System nach einem der vorangehenden Ansprüche, **dadurch gekennzeichnet, dass** die Verarbeitungsmittel (7) mindestens einen Drucksensor (14) zum Ermitteln des Funktionsparameters umfassen.

4. System nach Anspruch 2 oder 3, **dadurch gekennzeichnet, dass** das Fahrzeug bereits mit den Temperatursensoren (12) und/oder dem Drucksensor (14) ausgestattet ist.

5. System nach einem der vorangehenden Ansprüche, **dadurch gekennzeichnet, dass** die Steuermittel (5) einen ersten Microcontroller, der zur Steuerung der Drehgeschwindigkeit des Ventilators (4) konzipiert ist und einen zweiten Microcontroller umfassen, der die computergestützte Steuereinheit (6) definiert, welche die Funktionsparameter verarbeitet und das Steuersignal erzeugt.

6. System nach einem der vorangehenden Ansprüche, **dadurch gekennzeichnet, dass** es eine Vielzahl von elektrischen Slave-Lüftern (16, 22) umfasst, die von den Steuermitteln (5) des elektrischen Master-Lüfters angetrieben werden, wobei jeder elektrischer Slave-Lüfter einen entsprechenden Eingang (21, 24) für das Steuersignal aufweist.

7. System nach einem der vorangehenden Ansprüche, **dadurch gekennzeichnet, dass** der elektrische Master-Lüfter (2) eine Vielzahl von Ausgängen (20) umfasst, durch die ein zweites, angemessen von der computergestützten Steuereinheit (6) verarbeitetes Steuersignal an Vorrichtungen im Fahrzeug gesendet wird, die vom elektrischen Master-Lüfter (2) angetrieben werden.

8. System nach Anspruch 1, **dadurch gekennzeichnet, dass** der elektrische Master-Lüfter (2) ein Zentrifugallüfter ist und ein Fahrzeugparameter die Temperatur der Luft in der Fahrzeugkabine ist, wobei die Drehgeschwindigkeit des Ventilators (4) von der computergestützten Steuereinheit (6) gemäß der Kabinentemperatur bestimmt wird.

## Revendications

1. Système de ventilation pour véhicules comprenant :
- au moins un ventilateur électrique maître (2) comprenant une soufflante (4), un moteur électrique (3) pour entraîner la soufflante (4) et un moyen de commande installé au niveau du moteur (3) pour commander la vitesse de rotation de la soufflante (4), le moyen de commande comprenant une unité de commande informatisée (6) et une pluralité d'entrées (9, 10, 11) pour au moins un paramètre du véhicule, le système de ventilation étant **caractérisé en ce que** l'unité de commande informatisée (6) est programmée pour saisir et traiter les paramètres du véhicule de manière à générer un signal de commande pour commander la vitesse de rotation du moteur électrique (3), le moyen de commande (5) comprenant également au moins une sortie (20, 26) pour le signal de commande, le système de ventilation comprenant également
- au moins un deuxième ventilateur électrique esclave (16, 22) comprenant une deuxième soufflante (18), un deuxième moteur électrique (19) pour entraîner la deuxième soufflante (18) et un deuxième moyen de commande respectif (17, 25) conçu pour convertir le signal de commande en une deuxième vitesse de rotation de la deuxième soufflante (18), le deuxième ventilateur électrique (16, 22) présentant une deuxième entrée respective (21, 24) en communication avec la sortie (20, 26).

2. Système selon l'une quelconque des revendications précédentes, **caractérisé en ce que** le moyen de traitement (7) comprend au moins un détecteur de température (12) pour détecter le paramètre fonctionnel.

3. Système selon l'une quelconque des revendications précédentes, **caractérisé en ce que** le moyen de traitement (7) comprend au moins un détecteur de pression (14) pour détecter le paramètre fonctionnel.

4. Système selon la revendication 2 ou 3, **caractérisé en ce que** les détecteurs de température (12) et/ou le détecteur de pression (14) sont montés prêts à l'emploi dans le véhicule.

5. Système selon l'une quelconque des revendications précédentes, **caractérisé en ce que** le moyen de commande (5) comprend un premier microcontrôleur conçu pour contrôler la vitesse de rotation de la soufflante (4) et un deuxième microcontrôleur déterminant l'unité de commande informatisée (6) traitant les paramètres fonctionnels et générant le signal de commande.

6. Système selon l'une quelconque des revendications précédentes, **caractérisé en ce qu'**il comprend une pluralité de ventilateurs électriques esclaves (16, 22) entraînés par le moyen de commande (5) du ventilateur électrique maître, chaque ventilateur électrique esclave présentant une entrée respective (21, 24) pour le signal de commande.

7. Système selon l'une quelconque des revendications précédentes, **caractérisé en ce que** le ventilateur électrique maître (2) comprend une pluralité de sorties (20) à travers lesquelles un deuxième signal de commande traité de façon appropriée par l'unité de commande informatisée (6) est envoyé aux dispositifs du véhicule, entraînés par le ventilateur électrique maître (2).

8. Système selon la revendication 1, **caractérisé en ce que** le ventilateur électrique maître (2) est un ventilateur centrifuge et **en ce qu'**un paramètre du véhicule est la température de l'air dans l'habitacle du véhicule, la vitesse de rotation de la soufflante (4) étant déterminée par l'unité de commande informatisée (6) selon la température dans l'habitacle.
